# EUROPÄISCHE PATENTSCHRIFT

(11) **EP 2 140 177 B1**
(45) Veröffentlichungstag und Bekanntmachung des Hinweises auf die Patenterteilung: **26.01.2011**
(21) Anmeldenummer: 08717490.0
(22) Anmeldetag: 07.03.2008
(51) Int. Cl.: F16H 63/32

(54) **ANORDNUNG EINER SCHALTSCHWINGE IN EINEM GETRIEBE**
ARRANGEMENT OF A GEAR SHIFT rocker FORK IN A TRANSMISSION
ENSEMBLE FOURCHETTE pivotante DE BOÎTE DE VITESSES

(30) Priorität: 23.03.2007 DE 102007013929
(43) Veröffentlichungstag der Anmeldung: 06.01.2010
(73) Patentinhaber: ZF Friedrichshafen AG, 88038 Friedrichshafen (DE)
(72) Erfinder: HÖRING, Gerhard, 88709 Hagnau (DE); MILLER, Martin, 88090 Immenstaad (DE)
(86) Internationale Anmeldenummer: PCT/EP2008/052743
(87) Internationale Veröffentlichungsnummer: WO 2008/116736

(56) Entgegenhaltungen:
- DE-A1- 10 230 184
- DE-A1-102005 005 693
- DE-C1- 19 954 545
- US-A- 2 685 210
- US-A1- 2002 139 222

## Beschreibung

Die Erfindung betrifft eine Anordnung einer Schaltschwinge in einem Gehäuse eines Getriebes nach dem Oberbegriff des Patentanspruches 1.

Schaltschwingen sind bekannte Schaltelemente zur Schaltung von Gängen in einem Schaltgetriebe. Die Schaltschwinge ist bogen- oder gabelförmig ausgebildet und schwenkbar gegenüber dem Getriebegehäuse gelagert. Sie greift mit Gleitsteinen in eine Ringnut einer Schalt- oder Schiebemuffe ein, welche den gewünschten Gang schaltet. Die Betätigung der Schaltschwinge erfolgt über eine Schaltschiene oder Schaltstange, welche längs verschiebbar im Getriebegehäuse angeordnet ist und über eine Koppelverbindung mit der Schaltschwinge verbunden ist. Dadurch kommt eine Schwenkbewegung der Schaltschwinge in die eine oder andere Richtung zustande.

Durch die DE 43 42 957 A1 der Anmelderin wurde eine Schaltvorrichtung mit einer derartigen Schaltschwinge bekannt. Die schwenkbare Lagerung der Schaltschwinge erfolgt über zwei gehäusefeste Zapfen, welche in entsprechende Sacklochbohrungen in der Schaltschwinge eingreifen und somit einerseits eine Schwenkbewegung um eine durch die Zapfen definierte Schwenkachse ermöglichen sowie andererseits ein axiales Spiel zulassen, sodass die Gleitsteine ohne Klemmen in der Ringnut der Schiebemuffe gleiten können. Bei der bekannten Schaltvorrichtung ist die durch die Zapfen definierte Schwenkachse der Schaltschwinge horizontal angeordnet.

Probleme können sich dann ergeben, wenn die Schwenkachse nicht horizontal, sondern vertikal angeordnet ist - dann stellen sich im Hinblick auf den Eingriff der Gleitsteine in die Ringnut der Schiebemuffe unterschiedliche Verhältnisse ein. Die Schaltschwinge stützt sich dann mit ihrem gesamten Gewicht über den oberen Gleitstein auf dem Grund der Ringnut der Schiebemuffe ab, während zwischen dem unteren Gleitstein und der Ringnut ein Spiel besteht. Dies hat den Nachteil zur Folge, dass der obere Gleitstein einem ständigen Verschleiß unterliegt und der untere Gleitstein aus der Ringnut nach außen (nach unten) rückt und somit keine optimale Überdeckung mehr gegeben ist. Der Eingriff der Schaltschwinge in die Schaltstange ist beim Stand der Technik derart ausgebildet, dass ein entsprechender Fortsatz oder Finger der Schaltschwinge von unten in eine Nut der Schaltstange eingreift, sodass keine Gewichtskraft von der Schaltschwinge in die Schaltstange eingeleitet wird. Daher nimmt auch bei zunehmendem Verschleiß des oberen Gleitsteins das Spiel in senkrechter Richtung zwischen Schaltschwinge und Schaltstange zu, was die Überdeckung verringert und zu einer erhöhten Beanspruchung der Schaltstange und der Schaltschwinge führt. Die Merknale des Oberbegriffes des Anspruchs 1 sind aus US 2685210 bekannt.

Es ist Aufgabe der vorliegenden Erfindung, eine Anordnung einer Schaltschwinge der eingangs genannten Art derart zu gestalten, dass der Verschleiß der Gleitsteine reduziert und der Eingriff der Gleitsteine in die Schiebemuffe sowie der Eingriff der Schaltschwinge in die Schaltstange verbessert werden.

Die Aufgabe der Erfindung wird durch die Merkmale des Patentanspruches 1 gelöst. Erfindungsgemäß ist vorgesehen, dass sich die Schaltschwinge mit ihrem Gewicht auf der Schaltstange abstützt und nicht mehr - wie beim Stand der Technik - auf der Schiebemuffe. Die Schaltschwinge ist über die Schwenklagerung bzw. Schwenkzapfen in senkrechter Richtung frei beweglich geführt, sodass sich das Gewicht der Schaltschwinge über ein an der Schaltschwinge angeordnetes Stützelement auf der Schaltstange abstützen kann. Daraus ergibt sich der Vorteil, dass der obere Gleitstein vom Gewicht der Schaltschwinge entlastet ist, sodass die Reibungskraft zwischen oberem Gleitstein und Nutgrund der Schiebemuffe reduziert wird. Dies verbessert den Getriebewirkungsgrad. Der obere Gleitstein liegt lediglich mit seinem Eigengewicht auf dem Nutgrund der Schiebemuffe auf. Ferner ergibt sich der Vorteil, dass das Stützelement über eine entsprechende Kontaktfläche ständig auf der Schaltstange aufliegt, sodass ein optimaler Eingriff bei der Schaltbewegungs-übertragung von der Schaltstange auf die Schaltschwinge erreicht wird. Darüber hinaus wird die Überdeckung des unteren Gleitsteines mit der Ringnut der Schiebemuffe verbessert.

Nach einer bevorzugten Ausführung weist die Schaltstange eine nach oben offene Nut auf, in welche das Stützelement eingreift und gleichzeitig auf dem Nutgrund der Nut aufliegt. Das vorzugsweise als Finger ausgebildete Stützelement überträgt also einerseits die Gewichtskraft der Schaltschwinge auf die Schaltstange - durch Abstützung auf dem Nutgrund - und überträgt andererseits bei einer Längsbewegung der Schaltstange eine Schaltkraft auf die Schaltschwinge, sodass deren Verschwenkung eingeleitet wird.

Nach einer weiteren bevorzugten Ausführungsform weist die Schaltstange eine nach unten offene Nut auf, in welche ein Koppelglied der Schaltschwinge eingreift. Das ebenfalls an der Schaltschwinge angeordnete Stützelement liegt auf einer Kontaktfläche am oberen Umfang der Schaltstange auf und stützt so die Schaltschwinge auf der Schaltstange ab. Durch diese Teilung der Funktionen ergibt sich der Vorteil, dass die Schaltkraftübertragung mit weniger Reibung erfolgt.

Ein Ausführungsbeispiel der Erfindung ist in der Zeichnung dargestellt und wird im Folgenden näher beschrieben.

Es zeigen:
- Fig. 1: eine perspektivische Darstellung einer erfindungsgemäßen Schaltschwinge mit Schiebemuffe und Schaltstange,
- Fig. 2: eine Ansicht der Schaltschwinge mit Schiebemuffe und Schaltstange in Achsrichtung und
- Fig. 3: eine weiteres Ausführungsbeispiel der Erfindung mit Schaltschwinge und Schaltstange.

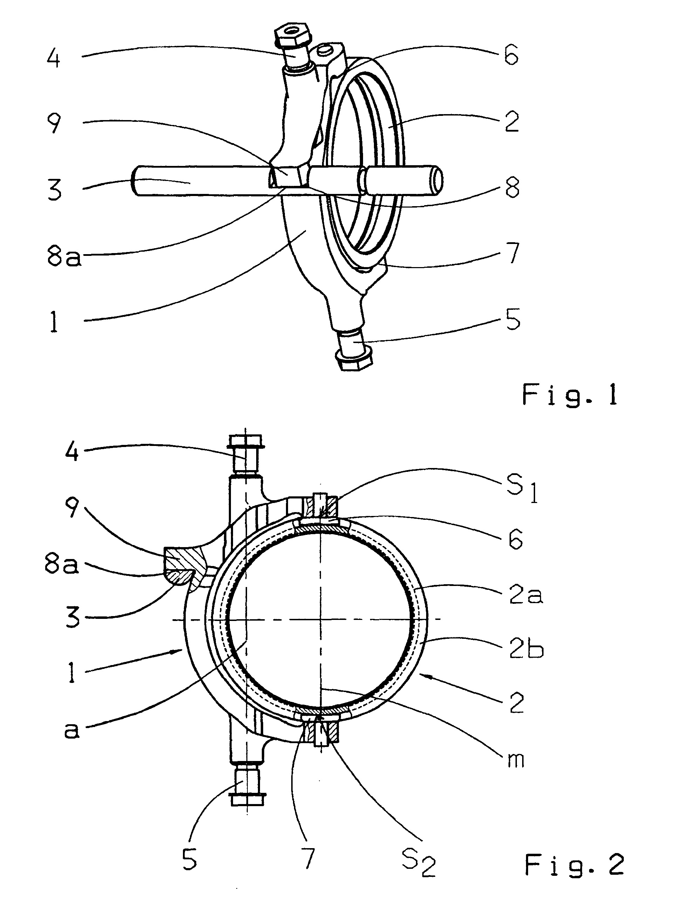

**Fig. 1** zeigt in perspektivischer Darstellung eine Schaltschwinge 1, eine Schiebemuffe 2 und eine Schaltstange 3, welche in einem nicht dargestellten Gehäuse eines Schaltgetriebes angeordnet sind. Die dargestellten Schaltmittel 1, 2, 3 dienen der Schaltung von Gängen, wobei die Schiebemuffe axial auf einer nicht dargestellten Welle zum Eingriff in ein benachbartes, nicht dargestelltes Zahnrad verschoben wird. Die Schaltschwinge 1 ist über zwei gehäusefest angeordnete Zapfen 4, 5 schwenkbar gelagert, wobei die durch die Längsachsen der Zapfen definierte Schwenkachse senkrecht angeordnet ist. Die Schaltschwinge 1 greift mit zwei Gleitsteinen, einem oberen Gleitstein 6 und einem unteren Gleitstein 7, in eine Ringnut (ohne Bezugszahl) der Schiebemuffe 2 ein. Die Schaltstange 3 ist - was nicht dargestellt ist - gehäusefest gelagert und weist im Bereich der Schaltschwinge 1 eine nach oben offene Nut 8 auf, in welche ein an der Schaltschwinge 1 angeordnetes Stützelement 9 eingreift. Das Stützelement 9 bildet mit der Schaltstange 3 eine Koppelverbindung, sodass durch eine Axialbewegung der Schaltstange 3 eine Dreh- bzw. Schwenkbewegung der Schaltschwinge 1 um die Zapfen 4, 5 erfolgt. Andererseits stützt sich die Schaltschwinge 1 mit ihrem Gewicht über das Stützelement 9 auf der Schaltstange 3 ab - das Stützelement 9 liegt auf dem Nutgrund 8a der Nut 8 auf.

**Fig. 2** zeigt die Anordnung gemäß Fig. 1 in einer Ansicht in Achsrichtung mit Blick auf die Schiebemuffe 2, die Schaltschwinge 1 sowie die Schaltstange 3, auch Schaltschiene genannt. In dieser Darstellung ist die durch den oberen Zapfen 4 und den unteren Zapfen 5 definierte, senkrecht angeordnete Schwenkachse a eingezeichnet. Die Schaltschwinge 1 ist in Richtung der Schwenkachse a nach oben und unten beweglich, d. h. die Zapfen 4, 5, welche in nicht dargestellter Weise in Sacklochbohrungen der Schaltschwinge 1 eingreifen, sind als axiale Loslager ausgebildet. Die Gleitsteine 6, 7 sind über nicht dargestellte Gleitzapfen in der Schaltschwinge 1 geführt und in Zapfenrichtung, d. h. in Richtung des senkrechten Durchmesser m beweglich. Die Schaltstange 3 bildet im Bereich der Nut 8 die nach oben weisende Kontaktfläche 8a, auf welcher das Stützelement 9 der Schaltschwinge 1 aufliegt. Das Gewicht der Schaltschwinge 1 stützt sich somit - abgesehen von Reibungskräften in den Lagerstellen der Zapfen und Gleitsteine - vollständig auf der Schaltstange 3 ab. Dies hat zur Folge, dass die Schaltschwinge 1 nicht mehr über den oberen Gleitstein 6 auf die Schiebemuffe 2 drückt - vielmehr liegt der obere Gleitstein 6 nur mit seinem Eigengewicht auf dem Nutgrund 2a der Ringnut 2b auf. Zwischen der Oberseite des oberen Gleitsteines 6 und der Unterseite der Schaltschwinge ist ein Spiel s₁ belassen. Analog ist zwischen der Oberseite des unteren Gleitsteines 7 und dem Nutgrund 2a ein Spiel s₂ belassen. Durch die erfindungsgemäße Abstützung der Schaltschwinge 1 auf der Schaltstange 3 ergibt sich für die Gleitsteine 6, 7 eine gleich bleibende Überdeckung mit der Ringnut 2b und andererseits eine ständige Anlage des Stützelementes 9 auf der Kontaktfläche 8a, sodass auch dort eine optimale Überdeckung gegeben ist.

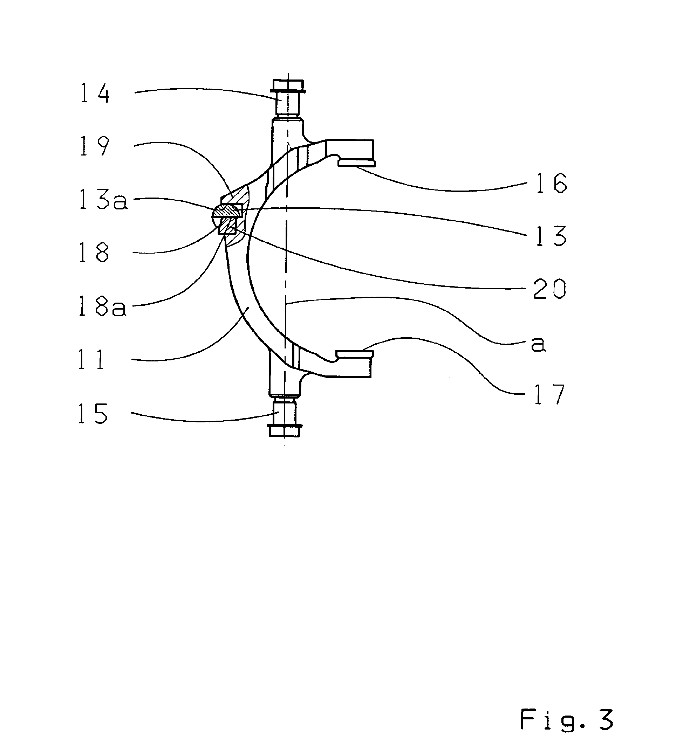

**Fig. 3** zeigt ein weiteres Ausführungsbeispiel der Erfindung, wobei gleiche Teile wie in den Figuren 1 und 2 in Figur 3 mit einer um 10 erhöhten Bezugszahl versehen sind. Fig. 3 zeigt eine Schaltschwinge 11, welche um eine senkrecht angeordnete Schwenkachse a schwenkbar und über gehäusefeste Zapfen 14, 15 gelagert ist. Ein oberer Gleitstein 16 und ein unterer Gleitstein 17 sind analog dem vorherigen Ausführungsbeispiel in der Schaltschwinge 11 gelagert. Eine Schaltstange 13 ist im Querschnitt dargestellt und weist eine nach unten offene Nut 18 mit einem nach unten weisenden Nutgrund 18a auf. Im Unterschied zum Ausführungsbeispiel gemäß Fig. 1 und 2, wo die Nut 8 nach oben offen ist, öffnet sich die Nut 18 nach unten. Ein als Nase ausgebildetes Stützelement 19, welches an die Schaltschwinge 11 angeformt ist, liegt auf der Oberkante 13a (Kontaktfläche) der Schaltstange 13 auf und stützt somit die Schaltschwinge 11 mit ihrem Gewicht auf der Schaltstange 13 ab. Die Schaltschwinge 11 weist ferner ein Koppelglied 20 auf, welches als Finger ausgebildet ist und in die Nut 18 der Schaltstange 13 eingreift. Das Koppelglied 20 kann beispielsweise auch einstückig mit de Schaltschwinge 11 ausgebildet sein. Das Koppelglied 20 überträgt keine Gewichtskräfte auf die Schaltstange 13, insofern entstehen auch keine gewichtsbedingten Reibungskräfte, wie dies noch beim vorherigen Ausführungsbeispiel der Fall ist. Stützelement 19 und Koppelglied 20 sind etwa U-förmig ausgebildet und umgreifen die Schaltstange 13 im Bereich der Nut 18. In diesem Ausführungsbeispiel findet somit eine Funktionenteilung statt, und zwar in der Weise, dass das Gewicht der Schaltschwinge 11 über das nasenförmige Stützelement 19 auf die Schaltstange 13 und die Schaltbewegung der Schaltstange 13 über das Koppelglied 20 auf die Schaltschwinge 11 übertragen wird. Dadurch ergeben sich beim Schaltvorgang minimale Reibungsverluste, d. h. ein höherer Schaltkomfort.

### Bezugszeichen

- 1: Schaltschwinge
- 2: Schiebemuffe
- 3: Schaltstange
- 4: Zapfen
- 5: Zapfen
- 6: Gleitstein
- 7: Gleitstein
- 8: Nut
- 8a: Nutgrund
- 9: Stützelement

- 11: Schaltschwinge
- 12: Schiebemuffe
- 13: Schaltstange
- 13a: Kontaktfläche
- 14: Zapfen
- 15: Zapfen
- 16: Gleitstein
- 17: Gleitstein
- 18: Nut
- 18a: Nutgrund
- 19: Stützelement
- 20: Koppelglied

## Patentansprüche

1. Anordnung einer Schaltschwinge (1, 11) in einem Gehäuse eines Getriebes, welches eine Schiebemuffe (2) und eine Schaltstange (3, 13) aufweist, wobei die Schaltschwinge (1, 11) gegenüber dem Gehäuse um eine Schwenkachse (a) schwenkbar gelagert, über die Schaltstange (3, 13) betätigbar ist und mittels Gleitsteinen (6, 7; 16, 17) in eine Ringnut (2b) der Schiebemuffe (2) eingreift, wobei die Schwenkachse (a) im Wesentlichen senkrecht ausgerichtet ist **dadurch gekennzeichnet dass**, die Schaltschwinge (1, 11) mindestens ein außerhalb der senkrecht angeordneten Schwenkachse (a) angeordnetes Stützelement (9, 19) aufweist, welches sich auf der Schaltstange (3) abstützt, so dass sich die Schaltschuwinge (1,11) mit item Gewicht auf des Schaltstange (3,13) dbstützt.

2. Anordnung nach Anspruch 1, **dadurch gekennzeichnet, dass** die Schaltschwinge (1, 11) über gehäusefeste Zapfen (4, 5; 14, 15) in Bezug auf die Schwenkachse (a) radial gelagert ist.

3. Anordnung nach Anspruch 1 oder 2, **dadurch gekennzeichnet , dass** die Gleitsteine (6, 7; 16, 17) gleitend in der Schaltschwinge (1, 11) aufgenommen sind.

4. Anordnung nach Anspruch 1,2 oder 3, **dadurch gekennzeichnet , dass** die Schaltstange (3) eine nach oben offene Nut (8) mit einem Nutgrund (8a) aufweist, dass das Stützelemente (9) in die Nut (8) eingreift und auf dem Nutgrund (8a) aufliegt.

5. Anordnung nach einem der Ansprüche 1 bis 4, **dadurch gekennzeichnet , dass** das Stützelement als von der Schaltschwinge (1) abragender Vorsprung (9) ausgebildet ist.

6. Anordnung nach Anspruch 1, 2 oder 3, **dadurch gekennzeichnet , dass** die Schaltstange (13) eine nach unten offene Nut (18) aufweist und dass das Stützelement (19) auf der Oberseite (13a) der Schaltstange (13) aufliegt.

7. Anordnung nach Anspruch 6, **dadurch gekennzeichnet, dass** die Schaltschwinge (11) ein Koppelglied (20) aufweist, welches in die nach unten offene Nut (18) eingreift.

8. Anordnung nach Anspruch 6 und 7, **dadurch gekennzeichnet, dass** das Stützelement (19) und das Koppelglied (20) die Schaltstange (13) U-förmig umfassen.

9. Anordnung nach einem der vorhergehenden Ansprüche, **dadurch gekennzeichnet, dass** die Gleitsteine (6, 7; 16, 17) in der Vertikalen (m) frei beweglich sind, dass der obere Gleitstein (6;16) mit der Schaltschwinge (1, 11) ein oberes Spiel (s₁) und der untere Gleitstein (7, 17) mit dem Nutgrund (2a) ein unteres Spiel (s₂) bildet.

## Claims

1. Arrangement of a gear shift rocker fork (1, 11) in a housing of a transmission which has a sliding sleeve (2) and a shift rod (3, 13), wherein the gear shift rocker fork (1, 11) is mounted pivotably in relation to the housing about a pivot axis (a), is actuable via the shift rod (3, 13) and engages in an annular groove (2b) in the sliding sleeve (2) by means of sliding blocks (6, 7; 16, 17), wherein the pivot axis (a) is oriented substantially vertically, **characterized in that** the gear shift rocker fork (1, 11) has at least one supporting element (9, 19) which is arranged outside the vertically arranged pivot axis (a) supported on the shift rod (3) such that the weight of the gear shift rocker fork (1, 11) is supported on the shift rod (3, 13).

2. Arrangement according to Claim 1, **characterized in that** the gear shift rocker fork (1, 11) is mounted radially with respect to the pivot axis (a) via pins (4, 5; 14, 15) mounted on the housing.

3. Arrangement according to Claim 1 or 2, **characterized in that** the sliding blocks (6, 7; 16, 17) are accommodated in the gear shift rocker fork (1, 11) in a sliding manner.

4. Arrangement according to Claim 1, 2 or 3, **characterized in that** the shift rod (3) has an upwardly open groove (8) with a groove base (8a), and **in that** the supporting element (9) engages in the groove (8) and rests on the groove base (8a).

5. Arrangement according to one of Claims 1 to 4, **characterized in that** the supporting element is designed as a projection (9) which protrudes from the gear shift rocker fork (1).

6. Arrangement according to Claim 1, 2 or 3, **characterized in that** the shift rod (13) has a downwardly open groove (18), and **in that** the supporting element (19) rests on the upper side (13a) of the shift rod (13).

7. Arrangement according to Claim 6, **characterized in that** the gear shift rocker fork (11) has a coupling member (20) which engages in the downwardly open groove (18).

8. Arrangement according to Claims 6 and 7, **characterized in that** the supporting element (19) and the coupling member (20) enclose the shift rod (13) in a U-shaped manner.

9. Arrangement according to one of the preceding claims, **characterized in that** the sliding blocks (6, 7; 16, 17) are freely movable in the vertical (m), and **in that** the upper sliding block (6; 16) forms an upper clearance (s₁) with the gear shift rocker fork (1, 11), and the lower sliding block (7, 17) forms a lower clearance (s₂) with the groove base (2a).

## Revendications

1. Agencement d'une fourchette de changement de vitesse (1, 11) dans un carter de boîte de vitesses, qui présente un manchon coulissant (2) et une tringle de changement de vitesse (3, 13), la fourchette de changement de vitesse (1, 11) étant montée de manière à pouvoir pivoter par rapport au carter autour d'un axe de pivotement (a), pouvant être actionnée par le biais de la tringle de changement de vitesse (3, 13) et venant en prise au moyen de coulisseaux (6, 7 ; 16, 17) dans une rainure annulaire (2b) du manchon coulissant (2), l'axe de pivotement (a) étant orienté essentiellement verticalement, **caractérisé en ce que** la fourchette de changement de vitesse (1, 11) présente au moins un élément de support (9, 19) disposé en dehors de l'axe de pivotement (a) disposé verticalement, lequel s'appuie sur la tringle de changement de vitesse (3) de sorte que la fourchette de changement de vitesse (1, 11) s'appuie sous l'effet de son poids sur la tringle de changement de vitesse (3, 13).

2. Agencement selon la revendication 1, **caractérisé en ce que** la fourchette de changement de vitesse (1, 11) est montée par le biais de tourillons (4, 5 ; 14, 15) fixés au carter radialement par rapport à l'axe de pivotement (a).

3. Agencement selon la revendication 1 ou 2, **caractérisé en ce que** les coulisseaux (6, 7 ; 16, 17) sont reçus de manière coulissante dans la fourchette de changement de vitesse (1, 11).

4. Agencement selon la revendication 1, 2 ou 3, **caractérisé en ce que** la tringle de changement de vitesse (3) présente une rainure (8) ouverte vers le haut avec une base de rainure (8a), **en ce que** l'élément de support (9) vient en prise dans la rainure (8) et s'applique au fond de la rainure (8a).

5. Agencement selon l'une quelconque des revendications 1 à 4, **caractérisé en ce que** l'élément de support est réalisé sous forme de saillie (9) faisant saillie depuis la fourchette de changement de vitesse (1).

6. Agencement selon la revendication 1, 2 ou 3, **caractérisé en ce que** la tringle de changement de vitesse (13) présente une rainure (18) ouverte vers le bas et **en ce que** l'élément de support (19) s'applique sur le côté supérieur (13a) de la tringle de changement de vitesse (13).

7. Agencement selon la revendication 6, **caractérisé en ce que** la fourchette de changement de vitesse (11) présente un organe d'accouplement (20) qui vient en prise dans la rainure (18) ouverte vers le bas.

8. Agencement selon les revendications 6 et 7, **caractérisé en ce que** l'élément de support (19) et l'organe d'accouplement (20) entourent la tringle de changement de vitesse (13) en forme de U.

9. Agencement selon l'une quelconque des revendications précédentes, **caractérisé en ce que** les coulisseaux (6, 7 ; 16, 17) sont librement mobiles dans la direction verticale (m), **en ce que** le coulisseau supérieur (6 ; 16) forme avec la fourchette de changement de vitesse (1, 11) un jeu supérieur (s₁) et le coulisseau inférieur (7, 17) forme avec la base de rainure (2a) un jeu inférieur (s₂).
